# EUROPÄISCHE PATENTSCHRIFT

(11) **EP 1 401 274 B1**
(45) Veröffentlichungstag und Bekanntmachung des Hinweises auf die Patenterteilung: **03.10.2012**
(21) Anmeldenummer: 02738164.9
(22) Anmeldetag: 14.06.2002
(51) Int. Cl.: A01N 25/30, A01N 57/20

(54) **PESTIZIDZUBEREITUNGEN ENTHALTEND COPOLYMERE**
PESTICIDE PREPARATIONS CONTAINING COPOLYMERS
PREPARATIONS PESTICIDES CONTENANT DES COPOLYMERES

(30) Priorität: 23.06.2001 DE 10130357
(43) Veröffentlichungstag der Anmeldung: 31.03.2004
(73) Patentinhaber: Clariant Produkte (Deutschland) GmbH, 65929 Frankfurt am Main (DE)
(72) Erfinder: ZERRER, Ralf, 63791 Karlstein (DE); MEYER, Gerd, Roland, 65929 Frankfurt am Main (DE); SCHERL, Franz, Xaver, 84508 Burgkirchen (DE)
(86) Internationale Anmeldenummer: PCT/EP2002/006541
(87) Internationale Veröffentlichungsnummer: WO 2003/000055

(56) Entgegenhaltungen:
- EP-A- 0 161 595
- EP-A- 0 577 914
- WO-A-01/08481
- WO-A1-02/089575
- DATABASE WPI Week 199941 Derwent Publications Ltd., London, GB; AN 1999-488743 XP002210299 & JP 11 209231 A (DAI CHI KOGYO SEIYAKU CO LTD), 3. August 1999 (1999-08-03)
- DATABASE WPI Week 199428 Derwent Publications Ltd., London, GB; AN 1994-230603 XP002210300 & JP 06 166602 A (EARTH SEIYAKU KK), 14. Juni 1994 (1994-06-14)
- DATABASE WPI Week 199428 Derwent Publications Ltd., London, GB; AN 1986-178247 XP002210301 & JP 61 108781 A (SANYO CHEMICAL IND LTD), 27. Mai 1986 (1986-05-27)
- DATABASE WPI Week 198748 Derwent Publications Ltd., London, GB; AN 1987-338765 XP002210302 & JP 62 243888 A (SANYO CHEM IND LTD), 24. Oktober 1987 (1987-10-24)

## Beschreibung

Gegenstand der Erfindung sind Pestizidzubereitungen gemäβ Anspruch 1, enthaltend Copolymere, die durch Copolymerisation von Glycerin, Dicarbonsäuren und Monocarbonsäuren erhältlich sind. Die Copolymere bewirken eine verbesserte biologische Aktivität der Pestizide (Herbizide, Insektizide, Fungizide, Bakterizide, Molluskizide, Nematizide und Rodentizide).

Pflanzenschutzmittel sind chemische oder natürliche Substanzen, die in Pflanzenzellen, -gewebe oder parasitäre Organismen in oder auf der Pflanze eindringen und diese schädigen und/oder zerstören. Den größten Anteil an Pestiziden stellen Herbizide, gefolgt von Insektiziden und Fungiziden.

Die wichtigsten Herbizide sind chemische Substanzen, die auf das Transportsystem von Pflanzen, beispielsweise durch eine Hemmung von Photosynthese, Fettsäurebiosynthese oder Aminosäurebiosynthese, einwirken und zur Hemmung von Keimbildung und Wachstum bzw. zum Absterben der Pflanzen führen.

Die biologische Aktivität eines Pestizids kann anhand des Pflanzenwachstums bzw. der Schädigung der Pflanzen durch die Einwirkung des Wirkstoffes auf das Blatt in Abhängigkeit von der Wirkzeit und der Wirkkonzentration bestimmt werden.

Um die pestizide Wirkung optimal zu entfalten, muss das Pestizid das Blattgrün benetzen und ausreichend lange dort verbleiben oder ein Durchdringen der Wirksubstanz durch die Blattoberfläche erreicht werden. Ein generelles Problem ist dabei, dass nur ein Bruchteil des Wirkstoffes die gewünschte Aktivität entfaltet, d.h. auf schädliche Pflanzen und Gräser ausgebracht und dort ausreichend lange haften kann um in die Pflanzenzellen einzudringen. Der bei weitem größte Teil geht ungenutzt verloren.

Um diesen ökologischen und ökonomischen Nachteil zu beheben, werden, wie in einer Vielzahl von Patentschriften beschrieben, den meist wässrigen PestizidFormulierungen Hilfsstoffe zugesetzt, die das Netzvermögen, die Löslichkeit, das Emulgiervermögen oder das Adsorptionsverhalten der Wirksubstanz verbessern. Des weiteren können Additive das Eindringen der Wirksubstanzen durch die Blattoberfläche in die Pflanze erleichtern und beschleunigen.

Die WO 98/ 06259 beschreibt eine Methode zur Unterstützung der biologischen Aktivität von Pflanzenschutzmitteln, nach der eine wässrige Tensidlösung als Coformulierung mit dem oder nach dem Aufbringen der Wirksubstanz auf die Pflanzen aufgesprüht wird. Als benetzendes Agens werden wässrige siliziumorganische und/oder fluororganische Verbindungen eingesetzt.

In der EP 379 852 und der US 4 853 026 werden dem Herbizid N-Phosphonomethylglycin (Glyphosate) Öle als Wasser-in-Öl Emulsionen zugesetzt, um den Kontakt des hydrophilen Wirkstoffes mit der lipophilen Epidermis der Pflanzen zu verbessern. Nachteilig ist die unzureichende Stabilität der Emulsionen.

Eine Verbesserung der Wirkung anionischer Pestizide kann laut der WO 99/05914 dadurch erreicht werden, dass die anionische Wirksubstanz zusammen mit protonierten Polyaminen oder deren Derivaten als wässrige kolloidale Dispersion formuliert wird.

Die US 5 858 921 lehrt, dass man die Konzentration von Glyphosate ohne Verminderung der biologischen Aktivität reduzieren kann, wenn man der Formulierung wasserlösliche, langkettige Alkyldimethylaminoxide und wasserlösliche quaternäre Ammoniumhalogenide zusetzt.

In der US 5 750 468 werden Glyphosate-Formulierungen beschrieben, die als Adjuvant tertiäre oder quartemäre Etheramine enthalten.

Alle bisher beschriebenen Methoden zur Verbesserung der biologische Aktivität von Pestiziden sind nur von begrenztem Erfolg. Es bestand daher die Aufgabe neue Zusammensetzungen bzw. Formulierungen von Pestiziden, insbesondere von Herbiziden der Substanzklasse N-Phosphonomethylglycin (Glyphosate), mit verbesserter Wirksamkeit zu entwickeln, die gleichzeitig wirtschaftlich, einfach zu handhaben und für Mensch und Umwelt gut verträglich sind. Glyphosate wird als sehr umweltverträgliches und gleichzeitig hochwirksames und breit einsetzbares Herbizid in der Agrarwirtschaft in großen Mengen eingesetzt. Es wird vorzugsweise als wasserlösliches Salz, beispielsweise als Alkalimetall-, Ammonium-, Alkylamin-, Alkylsulfonium-, Alkylphosphonium, Sulfonylamin- oder Aminoguanidinsalz oder auch als freie Säure in wässrigen Formulierungen, aber auch in fester Form, mit Netzmitteln auf Blätter und Gräser aufgebracht, wo es auf das Transportsystem der Pflanzen einwirkt und diese vernichtet.

Überraschend wurde gefunden, dass die pestizide Wirkung von Pflanzenschutzmitteln durch den Zusatz von Copolymeren gemäβ Anspruch 1, erhältlich durch Copolymerisation von Glycerin, Dicarbonsäure(n) und Monocarbonsäure(n), deutlich verbessert wird.

Die Vernetzung der Polyglycerine mittels Dicarbonsäure(n) führt zu netzartigen Kondensationsprodukten. Überraschenderweise zeigen die vernetzten Polyglycerine eine deutlich höhere Wirksamkeit als unvernetzte Polyglycerine. Die Wirksamkeit kann gezielt über den Vernetzungsgrad beeinflusst werden. Vorteilhafterweise bewirkt die Vernetzung auch eine erhöhte Elektrolytstabilität der Mittel. Überdies lässt sich über den Vernetzungsgrad die Viskosität der Mittel gezielt einstellen.

Gegenstand der Erfindung sind Pestizidzubereitungen, enthaltend mindestens ein Copolymer, erhältlich durch Copolymerisation von
a) Glycerin
b) mindestens einer Dicarbonsäure und
c) mindestens einer Monocarbonsäure gemäß Formel (I)

   R¹-COOH (I),

   wobei R¹ (C₅-C₂₉)-Alkyl; (C₇-C₂₉)-Alkenyl; Phenyl oder Naphthyl, darstellt, dadurch gekennzeichnet, dass die Copolymere 19,9 bis 99 Gew.-% der Komponente a), 0,1 bis 30 Gew.-% der Komponente b) und 0,9 bis 80 Gew.-% der Komponente c) enthalten und es sich bei den Pestizidzubereitungen um SL (Soluble Liquid) -Zubereitungen oder SC (Suspension Concentrate) -Zubereitungen handelt.

In der WO 01/08481 werden Pestizid-Zubereitungen beschrieben, die Polyglycerine und/oder Polyglycerinderivate enthalten. Als Polyglycerinderivate können z. B. Polyglycerinester aus Polyglycerinen und Fettsäuren eingesetzt werden.

In der WO 02/089575 (Dokument von Stand der Technik gemäβ Artikel 54(3) EPÜ) werden Pestizidzubereitungen offenbart, die Copolymere enthalten, welche erhältlich sind durch Copolymerisation von Glycerin, mindestens einer Dicarbonsäure und mindestens einer Monocarbonsäure.

Die Alkyl- oder Alkenyl-Reste R¹ können linear oder verzweigt sein. Die Phenyl- oder Naphthyl-Reste können substituiert sein, wobei bevorzugte Substituenten (C₁-C₆)-Alkyl, (C₁-C₆)-Alkenyl, (C₁-C₆)-Alkoxy, -CHO, -CO((C₁-C₆)-Alkyl) oder Halogen sind.

Als Dicarbonsäuren b) bevorzugt sind Oxalsäure; Dicarbonsäuren gemäß Formel (II)

HOOC-R²-COOH (II)

und/oder Dicarbonsäuren gemäß Formel (III), 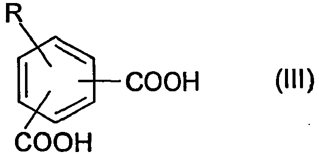 wobei
R² eine (C₁-C₄₀)-Alkylen-Brücke, bevorzugt (C₁-C₁₀)-Alkylen, besonders bevorzugt (C₁-C₄)-Alkylen, oder eine (C₂-C₂₀)-Alkenylen-Brücke, bevorzugt (C₂-C₆)-Alkenylen, besonders bevorzugt C₂-Alkenylen, darstellt und R einen oder mehrere Reste ausgewählt aus H; (C₁-C₂₀)-Alkyl, bevorzugt (C₁-C₆)-Alkyl, besonders bevorzugt (C₁-C₂)-Alkyl; (C₂-C₂₀)-Alkenyl, bevorzugt (C₂-C₆)-Alkenyl; Phenyl; Benzyl; Halogen; -NO₂; (C₁-C₆)-Alkoxy; -CHO oder -CO((C₁-C₆)-Alkyl), darstellt. R² in Formel (II) kann linear oder verzweigt sein. Unter Formel (II) fallen auch dimerisierte Fettsäuren, wie z.B. die Pripolsäuren.

Als Dicarbonsäuren b) besonders bevorzugt sind Oxalsäure, Malonsäure, Bernsteinsäure, Glutarsäure, Adipinsäure, Pimelinsäure, Korksäure, Fumarsäure, Maleinsäure, Phthalsäure, iso-Phthalsäure und/oder Terephthalsäure.

Als Dicarbonsäuren b) insbesondere bevorzugt sind Phthalsäure, iso-Phthalsäure und/oder Terephthalsäure.

Als Dicarbonsäure b) ganz besonders bevorzugt ist die Phthalsäure.

Als Monocarbonsäuren c) bevorzugt sind solche mit R¹ gleich (C₇-C₂₂)-Alkyl oder (C₇-C₂₂)-Alkenyl. Die Monocarbonsäuren c) sind wesentlich für die Erfindung, da sie eine Hydrophobisierung der Copolymere bewirken.

Als Monocarbonsäuren c) besonders bevorzugt sind gesättigte oder ungesättigte Fettsäuren oder Mischungen derselben, wie z.B. Kokossäure, Ölsäure, Laurinsäure, Tridecansäure, Myristinsäure, Pentadecansäure, Palmitinsäure, Margarinsäure, Stearinsäure, Nonadecansäure, Arachinsäure, Behensäure, Linolsäure, Linolensäure, Palmitinsäure und Talgfettsäure.

Als Monocarbonsäuren c) insbesondere bevorzugt sind Kokossäure und Talgfettsäure, ganz besonders bevorzugt ist Kokossäure.

Besonders vorteilhaft sind solche Copolymere, die durch Copolymerisation von Glycerin, Phthalsäure und Kokossäure erhältlich sind.

Die Copolymere enthalten 19,9 bis 99 Gew.-% an Struktureinheiten hervorgehend aus der Komponente a), 0,1 bis 30 Gew.-% an Struktureinheiten hervorgehend aus der Komponente b) und 0,9 bis 80 Gew.-% an Struktureinheiten hervorgehend aus der Komponente c).

Besonders bevorzugt enthalten die Copolymere 50 bis 90 Gew.-% an Struktureinheiten hervorgehend aus der Komponente a), 1 bis 25 Gew.-% an Struktureinheiten hervorgehend aus der Komponente b) und 2 bis 49 Gew.-% an Struktureinheiten hervorgehend aus der Komponente c).

Insbesondere vorteilhaft für die Eigenschaften der Copolymere ist ein Gehalt von 1 bis 10 Gew.-% an Struktureinheiten hervorgehend aus der Komponente b).

Die Copolymere besitzen vorteilhafterweise eine OH-Zahl von 400 bis 1000 mg KOH/g (Bestimmung nach DIN 53240).

Die Viskosität der 100 %igen Copolymere, gemessen bei 60°C mit einem Rotationsviskosimeter, beträgt bevorzugt 1000 mPas bis 35000 mPas, besonders bevorzugt 1500 mPas bis 35000 mPas, insbesondere bevorzugt 1500 bis 10000 mPas, ganz besonders bevorzugt 1500 bis 7500 mPas.

Höhere Viskositäten sind möglich, erschweren jedoch das Handling der Substanzen. Vorteilhafterweise erfolgt die Handhabung der Copolymere als 75 bis 90 gew.-%ige wässrige Lösung.

Die Copolymere sind erhältlich durch Copolymerisation von
a) Glycerin
b) mindestens einer Dicarbonsäure und
c) mindestens einer Monocarbonsäure gemäß Formel (I).

Bevorzugt wird die Copolymerisation so geführt, dass zuerst die Glycerin-Komponente a) zum Polyglycerin polymerisiert wird und anschließend das Polyglycerin und eine Mischung aus Dicarbonsäure-Komponente b) und Monocarbonsäure-Komponente c) copolymerisiert werden.

In einer anderen bevorzugten Variante wird zuerst die Glycerin-Komponente a) zum Polyglycerin polymerisiert, dann die Dicarbonsäure-Komponente b) copolymerisiert und anschließend wird die Monocarbonsäure-Komponente c) copolymerisiert.

In einer ebenfalls bevorzugten Variante wird zuerst die Glycerin-Komponente a) zum Polyglycerin polymerisiert, dann die Monocarbonsäure-Komponente c) copolymerisiert und anschließend wird die Dicarbonsäure-Komponente b) copolymerisiert.

Die Copolymerisation ist jedoch nicht auf die obigen Varianten beschränkt. Beispielsweise können auch Varianten vorteilhaft sein, bei denen ein Teil des Glycerins a) zu Oligomeren polymerisiert wird und anschließend die Dicarbonsäure-Komponente b), die Monocarbonsäure-Komponente c) und das restliche Glycerin a) copolymerisiert werden.

Im Folgenden werden beispielhaft vorteilhafte Ausführungsformen der Copolymerisation beschrieben.
A) Polymerisation des Glycerins zu Oligoglycerinen bzw. Polyglycerinen:
   Die Polymerisation des Glycerins zu Oligoglycerinen bzw. Polyglycerinen kann standardmäßig in einer Rührapparatur mit Wasserabscheider bei 240 bis 270°C und Stickstoffdurchleitung erfolgen. Als Katalysator wird 50%ige Natronlauge in einem Konzentrationsbereich von 0,1 bis 0,4 Gew.-% verwendet. Nach 5 bis 20 Stunden, je nach gewünschtem Polymerisationsgrad, wird die Polymerisation beendet. Es wird eine Probe entnommen und die OH-Zahl bestimmt. Aus der OH-Zahl lässt sich die mittlere Molmasse der Oligo- bzw. Polyglycerine berechnen.
B) Eintopfverfahren mit vorpolymerisiertem Polyglycerin:
   Das Polyglycerin wird in geschmolzenem Zustand in einem Rührbehälter mit Wasserauskreiser mit der Dicarbonsäure und der Monocarbonsäure im gewünschten Molverhältnis gemischt und unter Rühren 7 Stunden lang auf 200 bis 240°C erhitzt. Die Säurezahl des fertigen Produktes liegt unter 1 mg KOH/g.
C) Polyglycerin wird zuerst mit der Dicarbonsäure copolymerisiert (vemetzt) und dann mit der Monocarbonsäure copolymerisiert:
   Das Polyglycerin wird in geschmolzenem Zustand in einem Rührbehälter mit Wasserauskreiser mit der Dicarbonsäure im gewünschten Molverhältnis gemischt und unter Rühren 2 Stunden lang auf 200 bis 240°C erhitzt. Das entstandene Produkt ist klar und homogen. Anschließend wird die Monocarbonsäure zugegeben und 5 Stunden bei 200-240°C verestert. Die Säurezahl des Endproduktes liegt unter 1 mg KOH/g.
D) Polyglycerin wird zuerst mit der Monocarbonsäure copolymerisiert und dann mit der Dicarbonsäure copolymerisiert (vemetzt):
   Das Polyglycerin wird in geschmolzenem Zustand in einem Rührbehälter mit Wasserauskreiser mit der Monocarbonsäure im gewünschten Molverhältnis gemischt und unter Rühren 5 Stunden lang auf 200 bis 240°C erhitzt. Das entstandene Produkt weist eine Säurezahl < 1 mg KOH/g auf. Anschließend wird die Dicarbonsäure im gewünschten Molverhältnis zugegeben und 2 Stunden bei 200 bis 240°C verestert. Die Säurezahl des Endproduktes liegt unter 1 mg KOH/g.

Die Copolymere eignen sich als Adjuvantien in Pestizidformulierungen zur Verbesserung der biologischen Aktivität von Herbiziden, Insektiziden, Fungiziden, Akariziden, Bakteriziden, Molluskiziden, Nematiziden und Rodentiziden.

Bevorzugt werden die Copolymere in Herbizid-Formulierungen eingesetzt. Als Herbizide werden bevorzugt wasserlösliche Herbizide eingesetzt.

Als Herbizide eignen sind bevorzugt Glyphosate (N-Phosphonomethylglycin) und dessen Salze und/oder Derivate, Glufosinate, Acifluorfen, Asulam, Benazolin, Bentazone, Bilanafos, Bromacil, Bromoxynil, Chloramben, Clopyralid, 2,4-D-, 2,4-DB, Dalapon, Dicamba, Dichlorprop, Diclofop, Endothall, Fenac, Fenoxaprop, Flamprop, Fluazifop, Flumiclorac, Fluoroglycofen, Fomesafen, Fosamine, Glufosinate, Haloxyfop, Imazapic, Imazamethabenz, Imazamox, Imazapyr, Imazaquin, Imazethapyr, loxynil, MCPA, MCPB, Mecoprop, Methylarsonic acid/MSMA, Naptalam, Picloram, Quinclorac, Quizalofop, 2,3,6-TBA und/oder TCA.

Insbesondere bevorzugt als Herbizide sind Glyphosate (N-Phosphonomethylglycin) Glyphosate-Salze, Glyphosate-Derivate, Glufosinate und/oder Methylarsenic acid/MSMA.

Ganz besonders-bevorzugt als Herbizide sind Glyphosate (N-Phosphonomethylglycin), Glyphosate-Salze und/oder Glyphosate-Derivate.

Als wasserlösliche Salze eignen sich besonders die Alkalimetall-, Ammonium-, Alkylamin-, Alkylsulfonium-, Alkylphosphonium-, Sulfonylamin- und/oder Aminoguanidinsalze.

Erfindungsgemäße Konzentrat-Formulierungen, die vor dem Gebrauch verdünnt werden, können das Pestizid in Mengen von 5 bis 60 Gew.-%, bevorzugt 20 bis 40 Gew.-%, und die Copolymere in Mengen von 3 bis 50 Gew.-% enthalten. Das Gewichtsverhältnis von Copolymeren zu Pestizid liegt hier bevorzugt zwischen 1:20 und 1:1, bevorzugt 1:10 und 1:2.

Die Pestizid-Zubereitungen können darüber hinaus die üblichen Verdickungsmittel, Antigelmittel, Frostmittel, Lösungsmittel, Dispergiermittel, Emulgatoren, Konservierungsmittel, weitere Adjuvants, Bindemittel, Antischaummittel, Verdünner und Netzmittel enthalten.

Als Verdickungsmittel können Xanthan gum und/ oder Cellulose, beispielsweise Carboxy-, Methyl-, Ethyl-, oder Propylcellulose, verwendet werden. Die fertigen Mittel enthalten bevorzugt 0,01 bis 5 Gew.-% an Verdickungsmitteln.

Als Lösungsmittel eignen sich Monopropylenglykol, tierische und mineralische Öle.

Als Dispergiermittel und Emulgatoren eignen sich nichtionische, amphotere, kationische und anionische Tenside.

Als Konservierungsmittel können organische Säuren und ihre Ester, beispielsweise Ascorbinsäure, Ascorbylpalmitat, Sorbat, Benzoesäure, Methyl- und Propyl-4-Hydroxybenzoat, Propionate, Phenol, beispielsweise 2-Phenylphenat, 1,2-Benzisothiazolin-3-on, Formaldehyd, schwefelige Säure und deren Salze eingesetzt werden.

Als Entschäumer eignen sich Polysilicone.

Weitere Adjuvants können Alkoholethoxylate, Alkylpolysaccharide, Fettaminethoxylate, Sorbitan- und Sorbitolethoxylatderivate und Derivate des Alk(en)ylbernsteinsäureanhydrids sein.

Das Mischungsverhältnis dieser Adjuvants zu den Copolymeren liegt bevorzugt im Bereich 1:10 bis 10:1.

Als Netzmittel können Alkoholethoxylate/-propoxylate verwendet werden.

Die Pestizid-Zubereitungen besitzen bevorzugt einen pH-Wert von 4 bis 8, besonders bevorzugt 6 bis 7.

Die erfindungsgemäßen Formulierungen können gemäss den üblichen Methoden eingesetzt werden.

Wässrige Konzentrate werden vor dem Ausbringen mit der entsprechenden Menge an Wasser verdünnt. Bevorzugt werden pro Hektar 0,1 bis 5 kg, bevorzugt 0,3 bis 2,5 kg, Pestizid ausgebracht. Der Anteil der Copolymere beträgt bevorzugt 0,1 bis 3,0 kg/ha. Die Aussprühmenge an Pestizidzubereitung beträgt bevorzugt 50 bis 1000 I/ha.

Bei den Pestizid-Zubereitungen handelt es sich nicht um Emulsionen, sondern um SL(Soluble Liquid)-Zubereitungen oder SC(Suspension Concentrate)-Zubereitungen.

Vorteilhafterweise lassen sich die Eigenschaften der Copolymere bzw. Pestizidzubereitungen, wie z.B. Wasserlöslichkeit, Elektrolytstabilität, Viskosität und Kompatibilität mit Pflanzenschutzmittelwirkstoffen, sehr gut über den Vernetzungsgrad einstellen. Für den Vernetzungsgrad sind Art und Gehalt der Dicarbonsäure-Komponente b) - wobei der Gehalt von besonderer Bedeutung ist - entscheidend.

Überraschenderweise wurde gefunden, dass hochkonzentrierte wässrige Formulierungen aus anionischen Pestiziden, insbesondere Glyphosate in Salzform, und Copolymeren phasenstabil sind. Auch bei längerer Lagerzeit ist kein Auskristallisieren der ionischen Komponenten zu beobachten.

Neben der hohen Elektrolytstabilität bewirkt der erfindungsgemäße Einsatz der Copolymere eine Verbesserung der Kompatibilität und der Kontaktfähigkeit des hydrophilen Wirkstoffes mit der lipophilen Epidermis der Pflanzen.

Ein gutes Netz- und Absorptionsvermögen der erfindungsgemäßen Pestizidformulierungen unterstützt die biologische Aktivität des Wirkstoffes in den Pflanzen.

Gegenstand der Erfindung ist auch ein Verfahren zur Erhöhung der biologischen Aktivität von Pestiziden, das dadurch gekennzeichnet ist, dass die Pestizide in Form von Pestizidzubereitungen, enthaltend Copolymere, erhältlich durch Copolymerisation von
a) Glycerin
b) mindestens einer Dicarbonsäure und
c) mindestens einer Monocarbonsäure gemäß Formel (I), verwendet werden, wobei die Copolymere 19,9 bis 99 Gew.-% der Komponente a), 0,1 bis 30 Gew.-% der Komponente b) und 0,9 bis 80 Gew.-% der Komponente c) enthalten und es sich bei den Pestizidzubereitungen um SL (Soluble Liquid) -Zubereitungen oder SC (Suspension Concentrate) -Zubereitungen handelt.

Bevorzugt eignet sich das Verfahren für Herbizide, insbesondere für Glyphosate, dessen Salze und/oder Derivate.

### Beispiele

Die nachfolgenden Beispielen zeigen den Einfluss der Copolymere auf die biologische Aktivität des Herbizides Glyphosate.

### 1) Herstellung der Copolymere I bis V

### Herstellung von Polyglycerin mit n = 9,7:

2000 g Glycerin und 6,0 g NaOH (50%) wurden in einer Rührapparatur mit Stickstoffeinleitung und Wasserauskreiser unter Rühren auf 270°C erhitzt. Nach 9 Stunden Reaktionszeit und einem Austrag von 444 g Wasser wurde eine Probe genommen und die OH-Zahl bestimmt. Die ermittelte OH-Zahl betrug 891 mg KOH/g. Dies entspricht einem mittleren Kondensationsgrad n von 9,7 Glycerineinheiten. Der Kondensationsgrad kann annähernd auch über die Viskosität oder den Brechungsindex der Reaktionsmischung bestimmt werden. Dazu muss vorher eine Kalibriergerade erstellt werden.

### Herstellung Copolymer I:

180,00 g Polyglycerin n = 9,7 (0,243 mol) wurden in einen Rührbehälter mit N₂-Durchleitung und Wasserauskreiser gegeben und mit 24,70 g Kokosfettsäure (C₈/₁₈) (0,121 mol) und 10,13 g Phthalsäure (0,061 mol) versetzt. Anschließend wurde die Reaktionsmischung unter Rühren 7 Stunden auf 220°C erhitzt. Das Copolymer hatte eine Säurezahl von 0,40 mg KOH/g.

### Herstellung Copolymer II:

190,00 g Polyglycerin mit n = 9,7 (0,256 mol) wurden in einen Rührbehälter mit N₂-Durchleitung und Wasserauskreiser gegeben und mit 26,11 g Kokosfettsäure (C₈/₁₈) (0,128 mol) und 4,32 g Phthalsäure (0,026 mol) versetzt. Anschließend wurde die Reaktionsmischung unter Rühren 7 Stunden auf 220 ° C erhitzt. Das Copolymer hatte eine Säurezahl von 0,46 mg KOH/g.

### Herstellung Copolymer III:

185,00 g Polyglycerin mit n = 9,7 (0,256 mol) wurden in einen Rührbehälter mit N₂-Durchleitung und Wasserauskreiser gegeben und mit 4,25 g Phthalsäure (0,0256 mol) zwei Stunden lang bei 215°C vernetzt. Die Reaktionsmischung war klar und homogen. Danach wurden 25,50 g Kokosfettsäure (C₈/₁₈) (0,125 mol) in den Rührbehälter gegeben und 5 Stunden bei 215°C umgesetzt. Das Copolymer hatte eine Säurezahl von 0,38 mg KOH/g.

### Copolymer IV:

185,00 g Polyglycerin mit n = 9,7 (0,256 mol) wurden in einen Rührbehälter mit N₂-Durchleitung und Wasserauskreiser gegeben und mit 10,38 g Phthalsäure (0,0625 mol) zwei Stunden lang bei 215°C vernetzt. Die Reaktionsmischung war klar und homogen. Danach wurden 25,50 g Kokosfettsäure (C₈/₁₈) (0,125 mol) in den Rührbehälter gegeben und 5 Stunden bei 215°C umgesetzt. Das Copolymer hatte eine Säurezahl von 0,53 mg KOH/g.

### Copolymer V:

180,00 g Polyglycerin n = 9,7 (0,243 mol) wurden in einen Rührbehälter mit N₂-Durchleitung und Wasserauskreiser gegeben und mit 24,75 g Kokosfettsäure (C₈/₁₈) (0,121 mol) verestert, wobei nach 5 Stunden und einer Veresterungstemperatur von 215°C eine Säurezahl von 0,14 mg KOH/g erreicht wurde. Anschließend wurden 4,03 g Phthalsäure zugegeben und zwei Stunden lang bei 215°C vernetzt. Das Reaktionsendprodukt war klar und homogen.

### Herstellung von Testformulierungen enthaltend die Copolymere I bis V

Es wurden Testformulierungen hergestellt mit jeweils 200 g, 300 g und 500 g Glyphosate und jeweils 600 g der Copolymere I bis V in 300 I Wasser. Die Gewichtsangaben beziehen sich auf 100 % Wirkstoff und 100 % Adjuvant. Eine dem Verhältnis 300 I/ha entsprechende Formulierungsmenge wurde in einem Gewächshaus auf die Pflanzenspezies Abutilon theophrasti (ABUTH), Sesbania exaltata (SEBEX), Pharbitis purpurea (PHBPU), Galium aparine (GALAP), Amaranthus retroflexus (AMARE) und Echinochloa crus-galli (ECHCG) aufgebracht und nach 21 Tagen bei 20°C der Pflanzenwuchs nach einer %-Maßskala beurteilt.

0 % stehen für keinen Effekt und 100 % für ein komplettes Absterben der Pflanzenarten. Der Einfluss der Copolymere I bis V auf die herbizide Wirkung von Glyphosate ist in Tabelle 1 gezeigt.

**Tabelle 1: Einfluss der Copolymeren I - V auf die herbizide Wirkung von Glyphosate**

| Glyphosate (g/ha) | Copolymere | SEBEX | AMARE | GALAP | ABUTH | ECHCG | PHBPU | Gesamt |
|---|---|---|---|---|---|---|---|---|
| 200 | - | 10 | 20 | 5 | 0 | 15 | 10 | 10 |
| 300 | - | 15 | 45 | 20 | 10 | 20 | 20 | 22 |
| 500 | - | 30 | 65 | 40 | 15 | 40 | 40 | 38 |
| 200 | I | 75 | 80 | 25 | 20 | 70 | 45 | 53 |
| 300 | I | 85 | 85 | 50 | 55 | 85 | 65 | 70 |
| 500 | I | 95 | 90 | 75 | 75 | 90 | 85 | 85 |
| 200 | II | 35 | 70 | 45 | 25 | 65 | 30 | 45 |
| 300 | II | 50 | 85 | 70 | 50 | 80 | 55 | 65 |
| 500 | II | 90 | 95 | 80 | 70 | 95 | 80 | 85 |
| 200 | III | 40 | 65 | 35 | 20 | 60 | 20 | 40 |
| 300 | III | 65 | 80 | 60 | 50 | 70 | 35 | 60 |
| 500 | III | 85 | 85 | 70 | 65 | 85 | 55 | 74 |
| 200 | IV | 45 | 70 | 55 | 30 | 45 | 30 | 46 |
| 300 | IV | 65 | 85 | 65 | 50 | 65 | 50 | 63 |
| 500 | IV | 95 | 90 | 70 | 65 | 90 | 80 | 82 |
| 200 | V | 35 | 70 | 25 | 15 | 50 | 35 | 38 |
| 300 | V | 50 | 85 | 45 | 40 | 75 | 65 | 60 |
| 500 | V | 60 | 95 | 70 | 65 | 90 | 95 | 79 |

Man erkennt, dass die Copolymere eine deutliche Steigerung der herbiziden Wirkung von Glyphosaten bewirkten.

## Patentansprüche

1. Pestizidzubereitungen, enthaltend mindestens ein Copolymer, erhältlich durch Copolymerisation von
a) Glycerin
b) mindestens einer Dicarbonsäure und
c) mindestens einer Monocarbonsäure c) gemäß Formel (I)
R¹-COOH (I),
wobei R¹ (C₅-C₂₉)-Alkyl; (C₇-C₂₉)-Alkenyl; Phenyl oder Naphthyl darstellt, **dadurch gekennzeichnet, dass** die Copolymere 19,9 bis 99 Gew.% der Komponente a), 0,1 bis 30 Gew.% der Komponente b) und 0,9 bis 80 Gew.-% der Komponente c) enthalten und es sich bei den Pestizidzubereitungen um SL (Soluble Liquid) -Zubereitungen oder SC (Suspension Concentrate) -Zubereitungen handelt.

2. Pestizidzubereitungen nach Anspruch 1, **dadurch gekennzeichnet, dass** es sich bei der Dicarbonsäure b) um Oxalsäure; eine Dicarbonsäure gemäß Formel (II)
HOOC-R²-COOH (II),
und/oder eine Dicarbonsäure gemäß Formel (III) 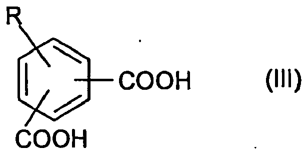 handelt, wobei
R² eine (C₁-C₄₀)-Alkylen-Brücke oder eine (C₂-C₂₀)-Alkenylen-Brücke darstellt und R einen oder mehrere Reste ausgewählt aus H, (C₁-C₂₀)-Alkyl, (C₂-C₂₀)-Alkenyl, Phenyl, Benzyl, Halogen, -NO₂, (C₁-C₆)-Alkoxy, -CHO oder -CO((C₁-C₆)-Alkyl) darstellt.

3. Pestizidzubereitungen nach Anspruch 2, **dadurch gekennzeichnet, dass** es sich bei der Dicarbonsäure b) um Oxalsäure, Malonsäure, Bernsteinsäure, Glutarsäure, Adipinsäure, Pimelinsäure, Korksäure, Fumarsäure, Maleinsäure, Phthalsäure, iso-Phthalsäure und/oder Terephthalsäure handelt.

4. Pestizidzubereitungen nach Anspruch 3, **dadurch gekennzeichnet, dass** es sich bei der Dicarbonsäure b) um Phthalsäure, iso-Phthalsäure und/oder Terephthalsäure handelt.

5. Pestizidzubereitungen nach mindestens einem der Ansprüche 1 bis 4, **dadurch gekennzeichnet, dass** es sich bei der Monocarbonsäure c) um Fettsäuren oder Mischungen derselben handelt.

6. Pestizidzubereitungen nach Anspruch 5, **dadurch gekennzeichnet, dass** es sich bei der Monocarbonsäure c) um Kokossäure und/oder Talgfettsäure handelt.

7. Pestizidzubereitungen nach Anspruch 4 und 6, **dadurch gekennzeichnet, dass** es sich bei der Dicarbonsäure b) um Phthalsäure und bei der Monocarbonsäure c) um Kokosfettsäure handelt.

8. Pestizidzubereitungen nach mindestens einem der Ansprüche 1 bis 7, **dadurch gekennzeichnet, dass** die Copolymere 1 bis 10 Gew.-% der Komponente b) enthalten.

9. Pestizidzubereitungen nach mindestens einem der Ansprüche 1 bis 8, **dadurch gekennzeichnet, dass** die Copolymere eine OH-Zahl von 400 bis 1000 mg KOH/g besitzen.

10. Pestizidzubereitungen nach mindestens einem der Ansprüche 1 bis 9, **dadurch gekennzeichnet, dass** die Viskosität der Copolymere bei 60 °C 1000 bis 35000 mPas beträgt.

11. Pestizidzubereitungen nach mindestens einem der Ansprüche 1 bis 10, **dadurch gekennzeichnet, dass** bei der Copolymerisation zuerst die Glycerin-Komponente a) zum Polyglycerin polymerisiert wird und anschließend das Polyglycerin und eine Mischung aus Dicarbonsäure-Komponente b) und Monocarbonsäure-Komponente c) copolymerisiert werden.

12. Pestizidzubereitungen nach mindestens einem der Ansprüche 1 bis 10, **dadurch gekennzeichnet, dass** zuerst die Glycerin-Komponente a) zum Polyglycerin polymerisiert wird, dann die Dicarbonsäure-Komponente b) copolymerisiert wird und anschließend die Monocarbonsäure-Komponente c) copolymerisiert wird.

13. Pestizidzubereitungen nach mindestens einem der Ansprüche 1 bis 10, **dadurch gekennzeichnet, dass** zuerst die Glycerin-Komponente a) zum Polyglycerin polymerisiert wird, dann die Monocarbonsäure-Komponente c) copolymerisiert wird und anschließend die Dicarbonsäure-Komponente b) copolymerisiert wird.

14. Pestizidzubereitungen nach mindestens einem der Ansprüche 1 bis 10 **dadurch gekennzeichnet, dass** es sich bei den Pestiziden um Herbizide, Insektizide, Fungizide, Bakterizide, Molluskizide, Nematizide oder Rodentizide handelt.

15. Pestizidzubereitungen nach Anspruch 14, **dadurch gekennzeichnet, dass** es sich bei den Pestiziden um Herbizide handelt.

16. Pestizidzubereitungen nach Anspruch 15, **dadurch gekennzeichnet, dass** es sich bei den Herbiziden um Glyphosate, dessen Salze und/oder Derivate handelt.

17. Verfahren zur Steigerung der biologischen Aktivität von Pestiziden, **dadurch gekennzeichnet, dass** die Pestizide in Form von Pestizidzubereitungen entsprechend mindestens einem der Ansprüche 1 bis 16 eingesetzt werden.

## Claims

1. A pesticide preparation comprising at least one copolymer obtainable by copolymerization of
a) glycerol
b) at least one dicarboxylic acid and
c) at least one monocarboxylic acid c) according to formula (I)
R¹-COOH (I),
where R¹ is (C₅-C₂₉)-alkyl; (C₇-C₂₉)-alkenyl; phenyl or naphthyl, wherein the copolymers comprise 19.9 to 99% by weight of component a), 0.1 to 30% by weight of component b) and 0.9 to 80% by weight of component c) and the pesticide preparations are SL (Soluble Liquid) preparations or SC (Suspension Concentrate) preparations.

2. The pesticide preparation as claimed in claim 1, wherein the dicarboxylic acid b) is oxalic acid; a dicarboxylic acid according to formula (II)
HOOC-R²-COOH (II),
and/or a dicarboxylic acid according to formula (III) 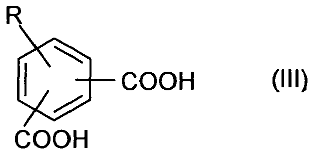 wherein
R² is a (C₁-C₄₀)-alkylene bridge or a (C₂-C₂₀)-alkenylene bridge and
R is one or more radicals chosen from H, (C₁-C₂₀)-alkyl, (C₂-C₂₀)-alkenyl, phenyl, benzyl, halogen, -NO₂, (C₁-C₆)-alkoxy, -CHO or -CO((C₁-C₆)-alkyl).

3. The pesticide preparation as claimed in claim 2, wherein the dicarboxylic acid b) is oxalic acid, malonic acid, succinic acid, glutaric acid, adipic acid, pimelic acid, suberic acid, fumaric acid, maleic acid, phthalic acid, isophthalic acid and/or terephthalic acid.

4. The pesticide preparation as claimed in claim 3, wherein the dicarboxylic acid b) is phthalic acid, isophthalic acid and/or terephthalic acid.

5. The pesticide preparation as claimed in at least one of claims 1 to 4, wherein the monocarboxylic acid c) is a fatty acid or mixtures thereof.

6. The pesticide preparation as claimed in claim 5, wherein the monocarboxylic acid c) is coconut acid and/or tallow fatty acid.

7. The pesticide preparation as claimed in claim 4 and 6, wherein the dicarboxylic acid b) is phthalic acid and the monocarboxylic acid c) is coconut fatty acid.

8. The pesticide preparation as claimed in at least one of claims 1 to 7, wherein the copolymers comprise 1 to 10% by weight of component b).

9. The pesticide preparation as claimed in at least one of claims 1 to 8, wherein the copolymers have an OH number of from 400 to 1000 mg of KOH/g.

10. The pesticide preparation as claimed in at least one of claims 1 to 9, wherein the viscosity of the copolymers at 60°C is 1000 to 35000 mPas.

11. The pesticide preparation as claimed in at least one of claims 1 to 10, wherein, during the copolymerization, firstly the glycerol component a) is polymerized to polyglycerol, and then the polyglycerol and a mixture of dicarboxylic acid component b) and monocarboxylic acid component c) are copolymerized.

12. The pesticide preparation as claimed in at least one of claims 1 to 10, wherein the glycerol component a) is firstly polymerized to polyglycerol, then the dicarboxylic acid component b) is copolymerized and then the monocarboxylic acid component c) is copolymerized.

13. The pesticide preparation as claimed in at least one of claims 1 to 10, wherein the glycerol component a) is firstly polymerized to polyglycerol, then the monocarboxylic acid component c) is copolymerized and then the dicarboxylic acid component b) is copolymerized.

14. The pesticide preparation as claimed in at least one of claims 1 to 10, wherein the pesticides are herbicides, insecticides, fungicides, bactericides, molluscicides, nematicides or rodenticides.

15. The pesticide preparation as claimed in claim 14, wherein the pesticides are herbicides.

16. The pesticide preparation as claimed in claim 15, wherein the herbicides are glyphosate, salts and/or derivatives thereof.

17. A method of increasing the bioactivity of pesticides, wherein the pesticides are used in the form of pesticide preparations corresponding to at least one of claims 1 to 16.

## Revendications

1. Préparations pesticides, contenant au moins un copolymère pouvant être obtenu par copolymérisation de
a) glycérine,
b) au moins un acide dicarboxylique et
c) au moins un acide monocarboxylique c) de formule (I)
R¹-COOH (I)
dans laquelle R¹ représente alkyle en (C₅-C₂₉) alcényle en (C₇-C₂₉) ; phényle ou naphtyle, **caractérisées en ce que** les copolymères contiennent 19,9 à 99 % en poids du composant a), 0,1 à 30 % en poids du composant b) et 0,9 à 80 % en poids du composant c), et les préparations pesticides consistent en des préparations SL (Soluble Liquid) ou des préparations SC (Suspension Concentrate).

2. Préparations pesticides selon la revendication 1, **caractérisées en ce que** l'acide dicarboxylique b) est l'acide oxalique ; un acide dicarboxylique de formule (II)
HOOC-R²-COOH (II)
et/ou un acide dicarboxylique de formule (III) 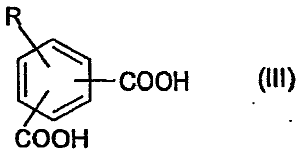 dans lesquelles
R² représente un pont alkylène en (C₁-C₄₀) ou un pont alcénylène en (C₂-C₂₀) et
R représente un ou plusieurs radicaux choisis parmi H, alkyle en (C₁-C₂₀), alcényle en (C₂-C₂₀), phényle, benzyle, halogène, -NO₂, alcoxy en (C₁-C₆), -CHO ou -CO(alkyle en (C₁-C₆)).

3. Préparations pesticides selon la revendication 2, **caractérisées en ce que** l'acide dicarboxylique b) est l'acide oxalique, l'acide malonique, l'acide succinique, l'acide glutarique, l'acide adipique, l'acide pimélique, l'acide subérique, l'acide fumarique, l'acide maléique, l'acide phtalique, l'acide isophtalique et/ou l'acide téréphtalique.

4. Préparations pesticides selon la revendication 3, **caractérisées en ce que** l'acide dicarboxylique b) est l'acide phtalique, l'acide isophtalique et/ou l'acide téréphtalique.

5. Préparations pesticides selon au moins l'une quelconque des revendications 1 à 4, **caractérisées en ce que** l'acide monocarboxylique c) consiste en des acides gras ou leurs mélanges.

6. Préparations pesticides selon la revendication 5, **caractérisées en ce que** l'acide monocarboxylique c) est l'acide de coco et/ou l'acide gras de suif.

7. Préparations pesticides selon les revendications 4 et 6, **caractérisées en ce que** l'acide dicarboxylique b) est l'acide phtalique et l'acide monocarboxylique c) est l'acide gras de coco.

8. Préparations pesticides selon au moins l'une quelconque des revendications 1 à 7, **caractérisées en ce que** les copolymères contiennent 1 à 10 % en poids du composant b).

9. Préparations pesticides selon au moins l'une quelconque des revendications 1 à 8, **caractérisées en ce que** les copolymères présentent un indice OH de 400 à 1 000 mg KOH/g.

10. Préparations pesticides selon au moins l'une quelconque des revendications 1 à 9, **caractérisées en ce que** la viscosité des copolymères à 60 °C est de 1 000 à 35 000 mPas.

11. Préparations pesticides selon au moins l'une quelconque des revendications 1 à 10, **caractérisées en ce que**, lors de la copolymérisation, le composant a) glycérine est tout d'abord polymérisé en polyglycérine, puis la polyglycérine et un mélange du composant b) acide dicarboxylique et du composant c) acide monocarboxylique sont copolymérisés.

12. Préparations pesticides selon au moins l'une quelconque des revendications 1 à 10, **caractérisées en ce que** le composant a) glycérine est tout d'abord polymérisé en polyglycérine, puis le composant b) acide dicarboxylique est copolymérisé, puis le composant c) acide monocarboxylique est copolymérisé.

13. Préparations pesticides selon au moins l'une quelconque des revendications 1 à 10, **caractérisées en ce que** le composant a) glycérine est tout d'abord polymérisé en polyglycérine, puis le composant c) acide monocarboxylique est copolymérisé, puis le composant b) acide dicarboxylique est copolymérisé.

14. Préparations pesticides selon au moins l'une quelconque des revendications 1 à 10, **caractérisées en ce que** les pesticides sont des herbicides, des insecticides, des fongicides, des bactéricides, des molluscicides, des nématicides ou des rodenticides.

15. Préparations pesticides selon la revendication 14, **caractérisées en ce que** les pesticides sont des herbicides.

16. Préparations pesticides selon la revendication 15, **caractérisées en ce que** les herbicides sont le glyphosate, ses sels et/ou dérivés.

17. Procédé d'augmentation de l'activité biologique de pesticides, **caractérisé en ce que** les pesticides sont utilisés sous la forme de préparations pesticides selon au moins l'une quelconque des revendications 1 à 16.
